# EUROPÄISCHE PATENTSCHRIFT

(11) **EP 1 437 206 B1**
(45) Veröffentlichungstag und Bekanntmachung des Hinweises auf die Patenterteilung: **12.07.2006**
(21) Anmeldenummer: 04000185.1
(22) Anmeldetag: 07.01.2004
(51) Int. Cl.: B28D 1/14, B23Q 35/128, B23Q 35/02

(54) **Einrichtung zum Bohren von Brillengläsern**
Device for drilling eyeglass lenses
Dispositif de perçage de verres de lunettes

(30) Priorität: 08.01.2003 DE 10300190
(43) Veröffentlichungstag der Anmeldung: 14.07.2004
(73) Patentinhaber: Ollendorf, Hans-Joachim, 39517 Brunkau (DE)
(72) Erfinder: Ollendorf, Hans-Joachim, 39517 Brunkau (DE); Ranke, Thomas, 39576 Stendal (DE); Pflaumbaum, Dieter, 39326 Wolmirstedt (DE); Rossmair, Robert, 04688 Mutzschen (DE)
(74) Vertreter: Leinung, Günter

(56) Entgegenhaltungen:
- DE-A- 19 804 428
- GB-A- 1 108 457
- PATENT ABSTRACTS OF JAPAN Bd. 1996, Nr. 10, 31. Oktober 1996 (1996-10-31) -& JP 08 155806 A (TOPCON CORP; IWAKURA TAKURO), 18. Juni 1996 (1996-06-18)

## Beschreibung

Die Erfindung betrifft eine Einrichtung zum Bohren von Brillengläsern, insbesondere für randlose Brillen.

JP 08 155 806, die als nächstliegender Stand der Technik angesehen wird, offenbart eine Bohreinheit und eine Aufnahmeeinheit zur Aufnahme eines Vorlageglases und eines Brillenglases, die in X und Y Richtungen verschiebbar ist. Das Vorlageglas und das Brillenglas sind in der Aufnahmeeinheit gemeinsam bewegbar und gemeinsam drehbar, damit die Tangentenebenen ihrer Oberflächen mit der Achse einer Bohrdetektionsmittel und der Bohrachse der Bohreinheit einen rechten Winkel bilden, und die Achse der Bohrung im Brillenglas senkrecht zur Glasebene des Brillenglases ausgebildet ist.

Die Bügel und der Nasensteg einer randlosen Brille werden üblicherweise an die vorgeschliffenen Brillengläser angeschraubt, so dass es notwendig wird, in den formgeschliffenen Brillengläsern die entsprechenden Bohrungen einzubringen. Dabei ist die Lage, die Position dieser Bohrungen in den jeweiligen Brillengläsern von der Form der Brillengläser sowie des Nasensteges und der Bügel abhängig. Zur Vereinfachung des Einbringens der Bohrungen in die jeweiligen Brillengläser werden derzeit von einer Vielzahl der Hersteller von Brillengläsern so genannte Vorlagegläser angeboten, die dem Optiker ein Hilfsmittel sind, um in die zu verwendenden Brillengläser die entsprechenden Bohrungen an den gewünschten Stellen einbringen zu können.

Derartige Vorlagegläser oder auch Schablonen für Brillengläser dienen unter anderem dazu, die Stellen festzulegen, an denen das Brillenglas durchbohrt werden soll oder die Position zu bestimmen, an der ein Beschlag- oder Fassungsteil am Brillenglas, zum Beispiel durch Kleben, befestigt werden soll. Mit einer Schablone können auch Markierungen auf einem Brillenglas angebracht werden, und Schablonen sind insbesondere auch dann erforderlich, wenn Brillenbügel oder Nasenbrücken/Nasenstege für randlose Brillen an den Brillengläsern zu befestigen sind.

Derartige Schablonen sind in vielfältiger Ausführung bekannt, so beschreibt die DE 44 38 634 A1 eine Schablone, durch die der Ort, an dem eine Bohrung in ein Brillenglas eingebracht werden soll, festgelegt werden kann. Diese Schablone kann eine transparente Folie sein, die über eine Haftfläche auf das Brillenglas aufgelegt werden kann. Die Haftwirkung ist so ausgelegt, dass einerseits ein Verrutschen der Folie gegenüber dem Glas während der Bearbeitungsvorgänge ausgeschlossen ist, andererseits aber die Folie auch nach der Bearbeitung problemlos vom Glas gelöst werden kann. Diese Art der Schablone ist insofern schwierig zu handhaben, als dass Auflegen einer ebenen Klebefolie auf eine gekrümmte Brillenglasoberfläche in der Regel nicht auf Anhieb gelingt. Da die Folie haftet, kann diese gegenüber dem Glas nicht verschoben oder gedreht werden, sie muss vielmehr vollständig vom Glas gelöst werden, und schließlich eignet sich eine derartige Folie nur wenig als Bohrschablone.

So wurde durch die WO 94/04957 A1 eine Lehre zum Markieren von Brillengläsern bekannt, die auch als Schablone für die Randbearbeitung eines Brillenglases dient. Die Lehre ist scheibenförmig mit zwei spiegelsymmetrischen Vertiefungen und einem Rand konstanter Dicke ausgebildet. Mit Hilfe von Löchern in der Lehre können Brillengläser markiert werden, nachdem deren Randbearbeitung durchgeführt und das zu markierende Glas in eine der Vertiefungen der Lehre eingesetzt worden ist. Die Lehre kann nur bei Brillengläsern angewandt werden, die in eine der Vertiefungen der Lehre eingesetzt werden können und die mit ihrem Rand in und an der Lehre anliegen.

Eine Schablone für ein Brillenglas mit wenigstens einem Loch oder einer Markierung beschreibt die DE 197 49 631 C2, bei der die Schablone mit einem auf das Brillenglas aufgesetzten Blocker gegenüber diesem unverschiebbar und drehfest verbindbar ist, und somit soll die Position des Loches oder der Markierung relativ zum Brillenglas festgelegt werden.
Auch dieser Lösung haftet der Nachteil an, dass auf das zu bearbeitende Brillenglas eine Schablone/eine Bohrhilfe aufgesetzt wird, welche zur Führung von Bohrwerkzeugen dient oder zur Führung und Aufnahme von Markierungselementen. Dies schließt nicht aus, dass die Oberflächen der Brillengläser durch die aufzusetzenden Schablonen/Bohrhilfen beschädigt werden.

Ein Verfahren zum Markieren oder Bohren von Löchern in Brillengläsern und eine Vorrichtung zur Durchführung des Verfahrens ist mit der DE 198 04 428 A1 bekannt geworden, bei dem die Lage von Bohrungen in einem Brillenglas, einer Formscheibe oder einer Stützscheibe berührend oder berührungslos abgetastet, die aufgenommenen Daten der Lage der Bohrungen als Polarkoordinaten einem Rechner zugeleitet und zum Steuern des Markierens oder Bohrens mittels einer CNC-gesteuerten Markier- bzw. Bohrvorrichtung verwendet werden.

Die Nachteile dieser Lösung liegen in dem hohen apparativen technischen Aufbau der Einrichtung, um das vorgeschlagene Verfahren zu realisieren, was gleichfalls mit einem hohen finanziellen Aufwand verbunden ist. Ferner ist nachteilig, dass mit dieser vorgestellten Lösung die Bohrungen in die Brillengläser nur so verbracht werden können, dass deren Achsen parallel zur Schleif-Rotationsachse verlaufen.

Unter Beachtung der Nachteile des Standes der Technik ist es Aufgabe der vorliegenden Erfindung, eine Einrichtung zum Bohren von Brillengläsern, insbesondere für randlose Brillengläser, zu entwickeln, mit der die Nachteile der bekannten Lösungen weitestgehend ausgeschlossen werden.

Diese Aufgabe wird erfindungsgemäß im durch die Merkmale des Hauptanspruches gelöst. Die abhängigen Anspruche offenbaren weitere Vorteile der Erfindung.

So wurde erfindungsgemäß eine Einrichtung zum Bohren von Brillengläsern geschaffen, bei der das Vorlageglas und das zu bohrende Brillenglas in einer Aufnahmevorrichtung gespannt und so in die Bohrposition geschwenkt werden, dass die einzubringende Bohrung so ausgebildet ist, dass deren Bohrachse erfindungsgemäß senkrecht zur Brillenglasebene verläuft. Dies bedeutet, das Vorlageglas und das zu bohrende Brillenglas werden so in Arbeitsposition gebracht, dass die Tangente der Wölbung des Brillenglases und die Achse der Bohreinheit und somit des Bohrwerkzeuges einen rechten Winkel bilden.

So ist die erfindungsgemäße Einrichtung als eine kompakte Baueinheit ausgebildet, die aus einer verfahr- und schwenkbaren Aufnahmeeinheit, in der das jeweilige Vorlageglas und zu bearbeitende Brillenglas Aufnahme finden und aus einer mit der Aufnahmeeinheit im Funktionszusammenhang stehende Bohreinheit mit gekoppelter Videokamera besteht. Es gehört auch zur Erfindung, dass die Aufhahmeeinrichtung mit dem eingesetzten Vorlageglas und Brillenglas in X-, Y-Richtung schwenkbar und verfahrbar ist, während die Bohreinheit mit der gekoppelten Videokamera fest in der Einrichtung angeordnet ist. Somit sind die Voraussetzungen gegeben, dass sowohl das Vorlageglas als auch das zu bearbeitende Brillenglas derart zur Bohreinheit positioniert werden, dass die in das Brillenglas einzubringende Bohrung senkrecht zur Glasebene gebohrt werden kann, somit die Tangente der Wölbung des Brillenglases und die Achse der Bohrvorrichtung und somit die Achse der eingebrachten Bohrung einen rechten Winkel bilden, somit hier ein wesentlicher Unterschied zur Lösung gemäß der DE 198 04 428 besteht, da mit dieser Lösung lediglich ein Bohren parallel zur Schleif-Rotationsachse möglich ist, somit kein rechter Winkel zwischen der Bohrachse und der Brillenglaswölbung erzielt wird.

Zur Erfindung gehört auch, dass die Aufnahmen für das Vorlageglas und das Brillenglas der Aufnahmeeinheit fest miteinander verbunden sind, analog der festen Verbindung/Koppelung zwischen der Bohreinheit und der Videokamera der Einrichtung. Dabei erfolgt die Befestigung der Vorlageglases und des Brillenglases in bekannter Art und Weise über so genannte Blocker, wobei die Beweglichkeit, d. h. die Schwenkbarkeit und die Verfahrbarkeit, der Baueinheit dadurch nicht beeinträchtigt wird, lediglich wird dadurch sichergestellt, dass der Längenabstand zwischen dem Vorlageglas und dem Brillenglas sowie der Abstand zwischen der Baueinheit und der Videokamera konstant bleiben, was auch für nachfolgend zu bearbeitende Brillengläser von Vorteil ist.

Die mit der Bohreinheit fest und in einem bestimmten Abstand verbundene Videokamera projiziert das Bild des im gleichen festen Abstand vom zu bohrenden Brillenglas zum eingesetzten Vorlageglas auf einen Monitor. Die Videokamera steht mit einem Computer in Wirkzusammenhang. Die Anvisierung der Bohrung des Vorlageglases mittels der vom Computer auf dem Videobild/Monitor erzeugten Visiereinrichtung bringt den Bohrer der Bohreinheit in eine Position zum Brillenglas. Infolge der gleichen Lage und Position sowie des festen Abstandes der beiden Gläser in der Aufnahmeeinheit wird durch den sich anschließenden Bohrvorgang eine Bohrung im Brillenglas erzeugt, die der Bohrung des Vorlageglases entspricht und dies derart, dass die Bohrachse im rechten Winkel zur Wölbung des Brillenglases und somit in der Tangentenebene des Bohr- oder Fräspunktes liegt.

Gemäß einer besonderen Ausführung der Erfindung ist es möglich, mit der erfindungsgemäßen Einrichtung auch das zweite Brillenglas einer zu fertigenden Brille, als gespiegeltes Brillenglas allgemein bezeichnet, zu bearbeiten d. h. die entsprechende Bohrung in das gespiegelte Brillenglas einzubringen.
Dabei wird analog verfahren wie bei der Einbringung der Bohrung in das erste Brillenglas, indem die über die Videokamera erfassten und ermittelten Werte Eingang in einen Rechner finden, dort ein Soll-Ist-Abgleich erfolgt, so dass die Aufnahmeeinheit, in der nun das gespiegelte Brillenglas eingesetzt ist, derart zur Bohreinheit positioniert wird, dass in das gespiegelte Brillenglas die notwendige Bohrung eingebracht werden kann, dies in der Soll-Ist-Übereinstimmung zwischen dem Vorlageglas und dem Brillenglas.

Mit der geschaffenen Einrichtung ist ein hochgenaues, bedienfehlerarmes und schnelles Bohren von randlosen Brillengläsern unter den Bedingungen des Augenoptikerhandwerks möglich, wobei weiterhin von Vorteil ist, dass auch Brillengläser, welche von der geometrischen Gestaltung des Vorlageglases abweichen, wenn dieses eine geringere Glasdicke oder eine geringere Oberflächenwölbung besitzt, bearbeitet werden können. So werden im Fall abweichender Glasdicke und abweichender Oberflächenwölbung mittels Positionsanfahrung geeigneter Winkelaufsätze die Abweichung der genannten Glasparameter ermittelt und in Soll-Positions-Abweichungen umgerechnet, die mittels Koordinatenangabe auf dem Monitor anzufahren sind. Die Übereinstimmung der äußeren Form vom Vorlageglas und Brillenglas erfolgt über übliche vorher durchgeführte Bearbeitungsvorgänge.

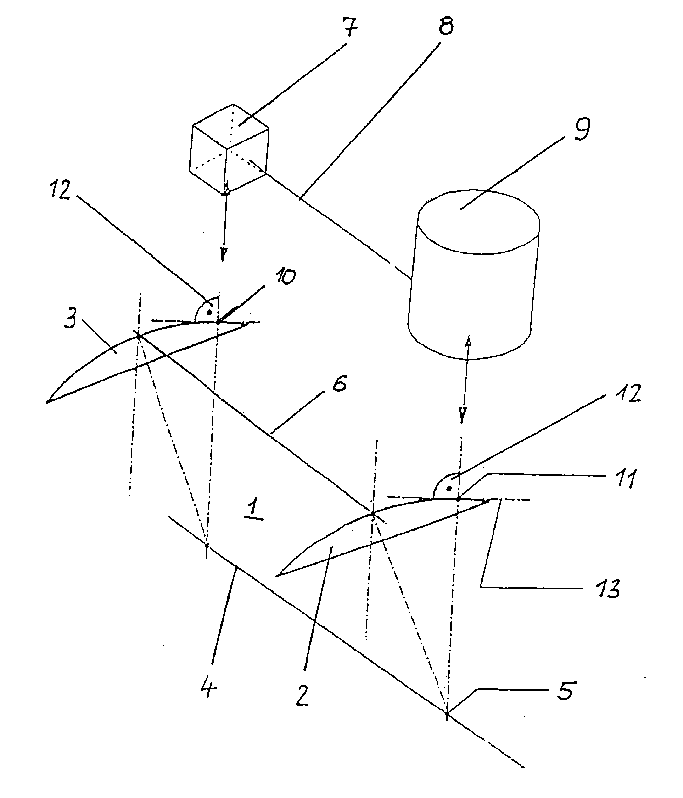

Mit nachfolgendem Ausführungsbeispiel soll die Erfindung näher erläutert werden.
In der zugehörigen Zeichnung ist die erfindungsgemäße Einrichtung prinziphaft dargestellt.
Aus der beigefügten Zeichnung ergibt sich der prinzipielle Aufbau der erfindungsgemäßen Einrichtung, welche aus einer Aufnahmeeinheit 1 besteht, mit entsprechenden Aufnahme- und Spanneinrichtungen ausgebildet ist, in denen das Brillenglas 2 und das Vorlageglas 3 einsetzbar sind und vorzugsweise über vorgesehene Blocker verspannt werden. Die Aufnahmeeinheiten 1 für das Brillenglas 2 und das Vorlageglas 3 besitzen eine gemeinsame Drehachse 4, sind über ihre Mittelpunkte 5 schwenkbar und über eine feste Kopplung 6 miteinander verbunden. Die zur Einrichtung gehörende Videokamera 7 und die Bohreinheit 9 sind fest in der Einrichtung positioniert und untereinander mittels einer festen Kopplung 8 verbunden. Die Bohreinheit 9 und die Videokamera 7 sind dabei so in der Einrichtung gelagert, dass sie vertikal verfahrbar sind.

Durch die Ausbildung der Aufnahmeeinheit 1 ist sichergestellt, dass das Vorlageglas 3 und das Brillenglas 2 über ihre gemeinsame Drehachse 4 geschwenkt werden können, was bedeutet, dass ein Verschwenken der Aufnahmeeinheit 1 gleichfalls ein Verschwenken des Vorlageglases 3 und das Brillenglases 2 erfolgt, was analog zutrifft für das Verfahren der Aufnahmeeinheit 1. Dies bedeutet somit, dass jede Positionsveränderung der Aufnahmeeinheit 1 übertragen wird auf das Vorlageglas 3 und das Brillenglas 2, somit eine genaue Positionierung des Vorlageglases 3 zur Videokamera 7 erfolgt. Über die Videokamera 7 wird im Visierpunkt 10 die Lage der Bohrung des Vorlageglases 3 erfasst, und infolge der festen Kopplung 8 zwischen der Videokamera 7 und der Bohreinheit 9 wird die anvisierte Position, der Visierpunkt 10, der Bohrung des Vorlageglases 3 auf den Bohrpunkt oder auch Fräspunkt 11 des Brillenglases 2 übertragen, so dass bei Inbetriebsetzung der Bohreinheit 9 eine Bohrung in das Brillenglas 3 eingebracht wird, die der Bohrung im Vorlageglas 3 deckungsgleich ist.
Das Einbringen der Bohrung in das Brillenglas 2, nämlich senkrecht zur Brillenglasebene, wird dadurch sichergestellt, dass die gesamte Aufnahmeeinheit 1 und somit auch das Vorlageglas 3 und das Brillenglas 2 so geschwenkt werden, dass sich rechte Winkel 12 zwischen den Achsen der Bohrungen in dem Vorlageglas 3 und dem Brillenglas 2 zu deren Tangentenebene 13 der Wölbung des jeweiligen Glases ergeben.

## Patentansprüche

1. Einrichtung zum Bohren von Brillengläsern, insbesondere für randlose Brillen, für das Einbringen von Bohrungen zur Aufnahme und Befestigung von Brillenbügeln als auch von Nasenstegen/Nasenbügeln unter Verwendung eines Vorlageglases, wobei das Vorlageglas und das zu bohrende Brillenglas in Aufnahmen aufgesetzt sind und über Blocker in diesen gehalten werden,
- die aus einer Aufnahmeeinheit (1), einer Videokamera (7) und einer Bohreinheit (9) besteht,
- bei der das Vorlageglas (3) und das Brillenglas (2) so in der Aufnahmeeinheit (1) angeordnet sind, dass die Tangentenebenen (13) ihrer Oberflächen mit der Achse der Aufnahmeoptik der Videokamera (7) und der Bohrachse der Bohreinheit (9) einen rechten Winkel bilden und die Achse der Bohrung im Brillenglas (2) senkrecht zur Glasebene des Brillenglases (2) ausgebildet ist,
- die Aufnahmeeinheit (1) verfahrbar und in X-, Y-Richtung über die gemeinsame Drehachse (4) schwenkbar ist,
- die Aufnahmen für das Vorlageglas (3) und das Brillenglas (2) über eine feste Kopplung (6) verbunden sind,
- die Videokamera (7) und die Bohreinheit (9) über eine feste Kopplung (8) verbunden und vertikal verstellbar in der Einrichtung angeordnet sind.

2. Einrichtung nach Anspruch 1, **dadurch gekennzeichnet, dass**
die Videokamera (7) mit einem Computer verbunden ist und mit diesem im Wirkzusammemhang steht, die Position der Bohrung im Vorlageglas (3) von der Videokamera (7) erfasst wird, ein Abgleich in einem Computer erfolgt, wonach das Brillenglas (2) zur Bohreinheit (9) positioniert wird.

3. Einrichtung nach den Ansprüchen 1 und 2, **dadurch gekennzeichnet, dass**
die Position des Brillenglases (2) erfasst wird und in den Bearbeitungsvorgang eines zweiten Brillenglases, eines gespiegelten Brillenglases, Eingang findet.

## Claims

1. Device for drilling spectacle lenses, in particular for rimless spectacles, for the introduction of drilled holes for accepting and fastening temples as well as nose bridges/nose pieces by the use of a template lens, in which the template lens and the spectacle lens to be drilled are placed into mounts and held in these mounts by pads,
- which consists of a mount unit (1), a video camera (7) and drill unit (9),
- in which the template lens (3) and the spectacle lens (2) are arranged in such a way in the mount unit (1) that the tangential planes (13) of their surfaces form a right angle with the axis of the object lens of the video camera (7) and with the drilling axis of the drill unit (9) and the axis of the hole in the spectacle lens (2) is formed perpendicularly to the plane of the lens of the spectacle lens (2),
- the mount unit (1) can be moved and swivelled in the X, Y directions about the common rotational axis (4),
- the mounts for the template lens (3) and the spectacle lens (2) are connected by a rigid coupling (6),
- the video camera (7) and the drill unit (9) are connected by a rigid coupling (8) and arranged to be vertically adjustable in the device.

2. Device in accordance with Claim 1, **characterised in that**
the video camera (7) is connected to a computer and works in conjunction with it, the position of the hole in the template lens (3) is detected by the video camera (7), a comparison takes place in a computer after which the spectacle lens (2) is positioned with respect to the drill unit (9).

3. Device in accordance with Claims 1 and 2, **characterised in that**
the position of the spectacle lens (2) is detected and a second spectacle lens, a mirrored spectacle lens, is used in the process.

## Revendications

1. Dispositif permettant de percer les verres à lunettes, notamment concernant les lunettes sans cercles, pour l'introduction d'alésages destinés à loger et à fixer aussi bien les branches que les arcades de lunettes en utilisant un verre-type, moyennant quoi ce dernier et le verre à lunettes à percer sont posés dans les logements et y sont retenus par des arrêts,
- qui est composé d'une unité d'enregistrement (1), d'une caméra vidéo (7) et d'une unité de perçage (9),
- pour lequel le verre-type (3) et le verre à lunettes (2) sont disposés dans l'unité d'enregistrement (1) de sorte que les plans des tangentes (13) de leurs surfaces forment, avec l'axe de l'optique de la caméra vidéo (7) et l'axe de perçage de l'unité de perçage (9), un angle droit et que l'axe du perçage dans le verre à lunettes (2) soit créé perpendiculairement au plan du verre à lunettes (2),
- l'unité d'enregistrement (1) est mobile et pivotante dans le sens des x et des y par l'axe de rotation commun (4),
- les logements prévus pour le verre-type (3) et le verre à lunettes (2) sont reliés par un accouplement fixe (6),
- la caméra vidéo (7) et l'unité de perçage (9) sont reliées par un accouplement fixe (8) et sont disposées verticalement dans le dispositif en étant réglables.

2. Dispositif selon la revendication n°1, **caractérisé par le fait**
**que** la caméra vidéo (7) est reliée à un ordinateur et est en interaction avec celui-ci, que la position du perçage est enregistrée dans le verre-type (3) par la caméra vidéo (7) et qu'un équilibre intervient dans l'ordinateur, après quoi le verre à lunettes (2) est positionné par rapport à l'unité de perçage (9).

3. Dispositif selon les revendications n°1 et n°2, **caractérisé par le fait**
**que** la position du verre à lunettes (2) est enregistrée et introduite dans le processus d'usinage d'un deuxième verre à lunettes, d'un verre à lunettes réfléchi.
